# FASCICULE DE BREVET EUROPEEN

(11) **EP 4 569 214 B1**
(45) Date de publication et mention de la délivrance du brevet: **18.11.2026**
(21) Numéro de dépôt: 23761185.0
(22) Date de dépôt: 31.07.2023
(51) Int. Cl.: F02C 7/06, F02C 7/36, F01D 9/06

(54) **TURBOMACHINE POUR AERONEF**
FLUGZEUGTURBINENTRIEBWERK
AIRCRAFT TURBINE ENGINE

(30) Priorité: 10.08.2022 FR 2208224
(43) Date de publication de la demande: 18.06.2025
(73) Titulaire: SAFRAN AIRCRAFT ENGINES, 75015 Paris (FR)
(72) Inventeur: ORIOL, Sébastien, 77550 MOISSY-CRAMAYEL (FR); DESOMBRE, Didier Gabriel Bertrand, 77550 MOISSY-CRAMAYEL (FR); JACQUEMARD, Christophe Paul, 77550 MOISSY-CRAMAYEL (FR); ROUFFET, Jonathan Jean-Pierre, 77550 MOISSY-CRAMAYEL (FR); STOLIAROFF-PEPIN, Nicolas, 77550 MOISSY-CRAMAYEL (FR)
(74) Mandataire: Gevers & Orès
(86) Numéro de dépôt international: PCT/FR2023/051219
(87) Numéro de publication internationale: WO 2024/033585

(56) Documents cités:
- EP-A1- 3 112 627
- EP-A1- 3 636 884
- FR-A1- 3 075 875
- FR-A1- 3 108 951
- US-A1- 2014 182 972

## Description

### Domaine technique de l'invention

L'invention concerne le domaine des turbomachines pour aéronef. Plus particulièrement, l'invention s'inscrit dans le domaine des turbomachines comprenant un système de lubrification d'un réducteur de vitesse, comprenant des circuits principal et auxiliaire de lubrification.

### Arrière-plan technique

Une turbomachine d'aéronef, comprend typiquement, d'amont en aval dans le sens d'écoulement des gaz, une soufflante mobile en rotation autour d'un axe longitudinal, un compresseur basse pression et un compresseur haute pression, une chambre de combustion, une turbine haute pression et une turbine basse pression et une tuyère d'échappement des gaz.

La soufflante permet l'aspiration d'un flux d'air se divisant en un flux primaire et un flux secondaire. Le flux primaire traverse une veine primaire de la turbomachine tandis que le flux secondaire est dirigé vers une veine secondaire entourant la veine primaire.

La turbomachine comprend en outre un carter d'entrée centré sur l'axe longitudinal et définissant l'entrée de la veine primaire. Le carter d'entrée comprend une virole interne annulaire entourée par une virole externe annulaire reliées par des bras radiaux.

Le flux primaire est comprimé au sein des compresseurs. L'air comprimé est ensuite mélangé à un carburant et brulé au sein de la chambre de combustion. Les gaz issus de la combustion traversent les turbines puis s'échappent au travers de la tuyère dont la section permet l'accélération de ces gaz pour générer de la propulsion.

Le rotor de la turbine basse pression est relié au rotor du compresseur basse pression par un arbre basse pression et le rotor de la turbine haute pression est relié au rotor du compresseur haute pression par un arbre haute pression. Par ailleurs, la soufflante est entrainée en rotation par un arbre de soufflante qui est relié à l'arbre basse pression par un réducteur de vitesse ce qui permet d'entrainer la soufflante à une vitesse de rotation inférieure à la vitesse de rotation de l'arbre basse pression. Le réducteur de vitesse est typiquement agencé dans une enceinte de lubrification pour la lubrification du réducteur de vitesse. L'enceinte de lubrification est typiquement agencée à l'intérieur de la virole interne.

Pour assurer la lubrification du réducteur de vitesse dans l'enceinte de lubrification, la turbomachine comprend en outre un circuit principal de lubrification du réducteur relié à l'enceinte de lubrification. Le circuit principal comprend une pompe d'alimentation en huile du réducteur reliée à un réservoir d'huile principal. La pompe d'alimentation en huile est typiquement entrainée en rotation par l'arbre haute pression par l'intermédiaire d'une boite d'accessoire.

Durant certaines phases de fonctionnement de la turbomachine, telles que les phases de rotation libre de la soufflante (connue sous le terme anglais « windmilling ») durant lesquelles l'arbre de soufflante est entrainé en rotation entrainant ainsi l'arbre basse pression, la vitesse de rotation de l'arbre haute pression est insuffisante pour entraîner la pompe d'alimentation à une vitesse suffisante pour fournir le débit nécessaire à la lubrification du réducteur. Or, il est nécessaire d'assurer une lubrification du réducteur de vitesse même durant ces phases de fonctionnement de la turbomachine. Dans ce cadre, la turbomachine comprend un circuit auxiliaire de lubrification du réducteur. Le circuit auxiliaire comprend typiquement une pompe auxiliaire alimentée en énergie par un générateur électrique par exemple ou entrainée par l'arbre basse pression, ce qui permet un amorçage de la pompe auxiliaire même en cas de rotation libre de la soufflante et de vitesse de rotation faible de l'arbre haute pression.

Afin d'alimenter le circuit auxiliaire en huile, le document FR-A1-3 075 875 propose de récupérer l'huile s'écoulant par gravité dans le fond d'enceinte.

A cet effet, l'un des bras radiaux situé à 6h présente une cavité interne débouchant dans l'enceinte au travers d'une entrée d'huile. Le bras présente par ailleurs une première sortie d'huile reliée au circuit principal par une première conduite et une seconde sortie d'huile reliée au circuit auxiliaire par une seconde conduite. La première conduite est reliée à une pompe de récupération d'huile alimentant le réservoir principal et la seconde conduite est reliée à une pompe auxiliaire du circuit auxiliaire.

En outre, selon ce document, une cloison radiale est agencée dans la cavité interne et délimite un compartiment amont et un compartiment aval, la seconde conduite étant reliée au compartiment amont et la première conduite étant reliée au compartiment aval.

Ainsi, durant les phases par exemple de rotation libre de la soufflante durant lesquelles la pompe d'alimentation n'est pas amorcée, les pompes auxiliaire et de récupération aspirent l'huile s'écoulant par gravité dans le bras situé à 6h au travers de chacune des conduites. Le circuit auxiliaire peut donc être alimenté en huile pour lubrifier le réducteur durant ces phases.

Bien que cette solution permette de disposer d'un volume d'huile pour la lubrification auxiliaire du réducteur de vitesse en cas par exemple de rotation libre de la soufflante, le volume d'huile disponible pour ces phases de fonctionnement n'est pas garanti et peut s'avérer insuffisant. En effet, ce document enseigne que pour maximiser la récupération d'huile, l'entrée d'huile présente une dimension axiale maximale s'étendant sur toute la largeur axiale du bras, définie entre des parois axiales amont et aval du bras. La combinaison de la configuration de l'entrée d'huile avec la présence de la paroi radiale fait obstacle à une récupération d'huile suffisante dans la première conduite. En effet, l'huile s'écoulant par gravité dans le bras alimente aussi bien le compartiment amont que le compartiment aval. Le circuit principal peut donc être alimenté en huile alors même que le circuit auxiliaire ne bénéficie pas d'un volume suffisant durant les phases de fonctionnement en rotation libre de la soufflante. Durant ces phases, une lubrification insuffisante du réducteur peut survenir, pouvant causer des dommages irréversibles à ce dernier.

Il existe donc un besoin de fournir une turbomachine qui assure une lubrification suffisante, efficace et fiable du réducteur de vitesse durant toutes les phases de fonctionnement de la turbomachine.

### Résumé de l'invention

A cet effet, l'invention propose une turbomachine pour un aéronef, s'étendant autour d'un axe longitudinal et comprenant :
- une soufflante entrainée en rotation autour de l'axe longitudinal par un arbre de soufflante,
- un arbre basse pression relié à l'arbre de soufflante par un réducteur de vitesse mécanique,
- une enceinte de lubrification annulaire dans laquelle est agencée le réducteur de vitesse,
- un système de lubrification du réducteur de vitesse comprenant un circuit principal de lubrification et un circuit auxiliaire de lubrification reliés à l'enceinte de lubrification, le circuit auxiliaire étant relié à un réservoir auxiliaire,
- un carter d'entrée comprenant une virole interne et une virole externe qui sont centrées sur l'axe longitudinal et qui sont reliées par des bras, la virole interne s'étendant autour de ladite enceinte de lubrification et le réservoir auxiliaire étant situé à l'extérieur de la virole externe, l'un des bras, appelé bras 6h, étant tubulaire et situé à 6h, ce bras 6h comportant :
   une extrémité radialement externe reliée à la virole externe et une extrémité radialement interne opposée,
   une cavité interne débouchant dans l'enceinte de lubrification au travers d'une entrée d'huile,
   une première sortie d'huile reliée au circuit principal,
   une seconde sortie d'huile reliée au réservoir auxiliaire, les première et seconde sorties d'huile étant radialement opposées à l'entrée d'huile, et
   une cloison radiale agencée dans la cavité interne et délimitant un compartiment amont et un compartiment aval, la seconde sortie étant située dans le compartiment amont et la première sortie étant située dans le compartiment aval.

La turbomachine selon l'invention est remarquable en ce que l'enceinte de lubrification comporte en outre un déflecteur relié à l'extrémité radialement interne du bras 6h et configuré pour dévier de l'huile s'écoulant par gravité de l'enceinte de lubrification vers le compartiment amont.

Grâce au déflecteur du bras, l'huile s'écoule de manière privilégiée dans le compartiment amont relié au réservoir auxiliaire. Lorsque le volume d'huile dans le réservoir auxiliaire dépasse le volume maximal du réservoir auxiliaire, cette huile s'accumule dans le compartiment amont. Lorsque le volume d'huile dans le compartiment amont est maximal, l'huile s'écoulant par gravité est transvasée par débordement dans le compartiment aval. Cette huile est alors communiquée au circuit principal. Le réservoir auxiliaire est donc alimenté en huile en priorité ce qui permet de garantir une lubrification du réducteur de vitesse lorsque le circuit auxiliaire est actif.

En outre, selon l'invention, le réservoir auxiliaire s'étend à l'extérieur de la virole externe. Une telle configuration du réservoir auxiliaire permet de disposer d'un réservoir auxiliaire de grand volume sans perturber l'écoulement d'un flux primaire dans une veine primaire délimitée par les viroles interne et externe.

Grâce à l'invention, un volume d'huile suffisant peut être stocké dans le réservoir auxiliaire pour alimenter le circuit auxiliaire. Le réducteur de vitesse peut donc être lubrifié de manière fiable et efficace durant toutes les phases de fonctionnement de la turbomachine.

L'invention peut comprendre une ou plusieurs des caractéristiques suivantes, prises isolément les unes des autres ou en combinaison les unes avec les autres :
- le déflecteur comprend une paroi axiale reliée au bras 6h et à la virole interne, la paroi axiale présentant une surface d'écoulement inclinée vers la cavité interne de telle manière que ladite paroi axiale s'éloigne continument de l'axe longitudinal en progressant vers l'amont du bras 6h,
- le bras 6h comprend des parois amont et aval axialement opposées et s'étendant radialement entre les extrémités interne et externe, l'entrée d'huile étant délimitée axialement par un bord du déflecteur et la paroi amont du bras 6h,
- le déflecteur présente une largeur circonférentielle égale à une largeur circonférentielle du bras 6h,
- l'entrée d'huile présente une section de passage égale ou supérieure à une section de passage de la première sortie d'huile,
- l'extrémité radialement externe du bras 6h présente une paroi de fond dans laquelle est ménagée la seconde sortie d'huile, la cloison s'étendant radialement vers l'intérieur du bras 6h à partir de la paroi de fond,
- une barrière de séparation est agencée dans la cavité interne et s'étend radialement du déflecteur au moins jusqu'à la seconde sortie d'huile,
- un évent est ménagé dans le déflecteur et débouche dans l'enceinte de lubrification et dans la cavité interne du côté du compartiment aval,
- le réservoir auxiliaire est directement raccordé à la seconde sortie d'huile,
- le réservoir auxiliaire est logé dans un compartiment inter-veines qui sépare un flux d'air produit par la soufflante en un flux primaire et un flux secondaire,
- le circuit principal comprend :
   - une pompe de récupération présentant une ligne hydraulique d'entrée et une ligne hydraulique de sortie,
   - une ligne hydraulique anti-cavitation reliée à la ligne hydraulique de sortie la pompe de récupération, et
   - une vanne auxiliaire hydraulique agencée entre la pompe de récupération et le bras, la vanne auxiliaire comprenant :
      un premier port d'entrée relié à la première sortie d'huile,
      un second port d'entrée relié à la ligne hydraulique anti-cavitation,
      un port de sortie relié à ligne hydraulique d'entrée de la pompe de récupération, et,
      un organe mobile entre une première position dans laquelle le port de sortie est en communication fluidique avec le premier port d'entrée et une seconde position dans laquelle le port de sortie est en communication fluidique avec le second port d'entrée.

### Brève description des figures

D'autres caractéristiques et avantages ressortiront de la description qui suit de modes de réalisation non limitatifs de l'invention en référence aux dessins annexés sur lesquels :
la figure 1 est une représentation schématique en coupe longitudinale d'une turbomachine d'aéronef selon l'invention,
la figure 2 est une représentation schématique en coupe longitudinale d'un réducteur de vitesse équipant la turbomachine de la figure 1,
la figure 3 est une vue schématique d'un système de lubrification du réducteur de la figure 2 selon un exemple de réalisation de l'invention,
la figure 4 est une vue schématique d'un système de lubrification du réducteur de la figure 2, selon un autre exemple de réalisation de l'invention,
la figure 5a est une vue schématique en coupe longitudinale du bras 6h selon un premier mode de réalisation de l'invention,
la figure 5b est une vue schématique en coupe longitudinale du bras 6h selon une variante du premier mode de réalisation de l'invention,
la figure 6a est une vue schématique en coupe longitudinale du bras 6h selon le premier mode de réalisation, lorsque la turbomachine est à l'arrêt et que les circuits principal et auxiliaire sont à l'arrêt,
la figure 6b est une vue schématique en coupe longitudinale du bras 6h selon le premier mode de réalisation, lorsque la turbomachine est dans une première phase de fonctionnement nominal durant laquelle le volume d'huile dans le compartiment amont est inférieur au volume maximal du compartiment amont, le circuit principal étant actif et le circuit auxiliaire à l'arrêt,
la figure 6c est une vue schématique en coupe longitudinale du bras 6h selon le premier mode de réalisation, lorsque la turbomachine est dans une seconde phase de fonctionnement nominal durant laquelle le volume d'huile dans le compartiment amont est supérieur au volume maximal du compartiment amont, le circuit principal étant actif et le circuit auxiliaire à l'arrêt,
la figure 6d est une vue schématique en coupe longitudinale du bras 6h selon le premier mode de réalisation, lorsque la turbomachine est dans une troisième phase de fonctionnement, par exemple de rotation libre de la soufflante, durant laquelle le circuit auxiliaire est actif.
la figure 7 est une vue en coupe longitudinale du bras 6h selon un second mode de réalisation de l'invention,
la figure 8a est une vue schématique en coupe longitudinale du bras 6h selon le second mode de réalisation, lorsque la turbomachine est à l'arrêt et que les circuits principal et auxiliaire sont à l'arrêt,
la figure 8b est une vue schématique en coupe longitudinale du bras 6h selon le second mode de réalisation, lorsque la turbomachine est dans une première phase de fonctionnement nominal durant laquelle le volume d'huile dans le compartiment amont est inférieur au volume maximal du compartiment amont, le circuit principal étant actif et le circuit auxiliaire à l'arrêt,
la figure 8c est une vue schématique en coupe longitudinale du bras 6h selon le second mode de réalisation, lorsque la turbomachine est dans une seconde phase de fonctionnement nominal durant laquelle le volume d'huile dans le compartiment amont est supérieur au volume maximal du compartiment amont, le circuit principal étant actif et le circuit auxiliaire à l'arrêt,
la figure 8d est une vue schématique en coupe longitudinale du bras 6h selon le second mode de réalisation, lorsque la turbomachine est dans une troisième phase de fonctionnement, par exemple de rotation libre de la soufflante, durant laquelle le circuit auxiliaire est actif.

### Description détaillée de l'invention

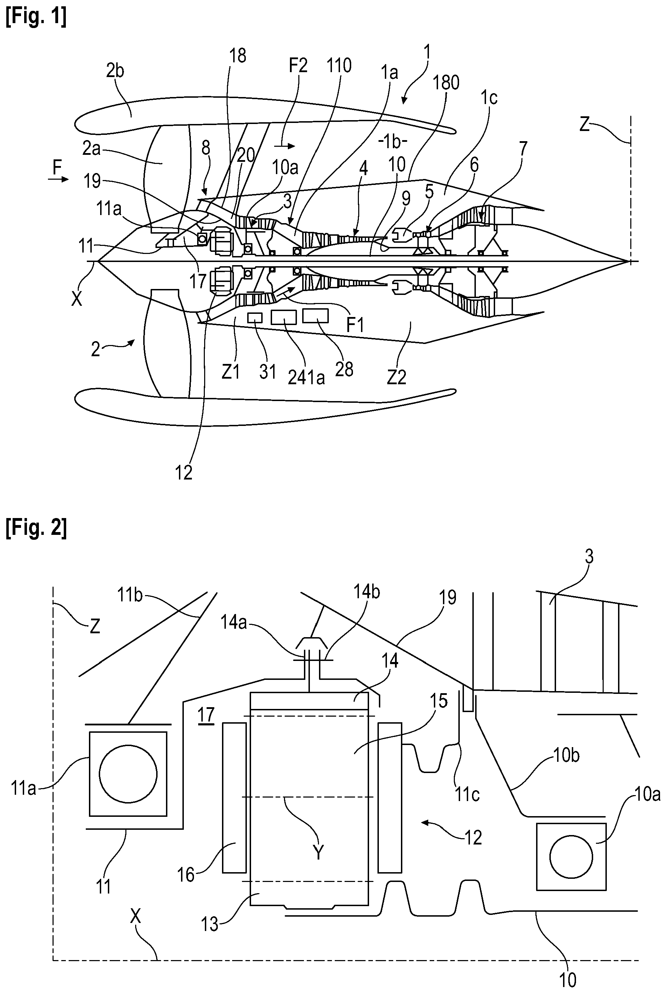

Un exemple de turbomachine 1 d'aéronef selon l'invention est représenté sur la figure 1. La turbomachine 1 s'étend autour et le long d'un axe longitudinal X.

Dans la présente demande, les termes « axial », « axialement », « radial » et « radialement » sont définis par rapport à l'axe longitudinal X.

Les termes « amont », « aval » sont définis par rapport au sens de circulation des gaz dans la turbomachine 1 suivant l'axe longitudinal X.

Les termes « interne », « intérieur », « externe », « extérieur », « extérieurement » sont définis par rapport à l'éloignement de l'axe longitudinal X le long d'un axe radial Z perpendiculaire à l'axe longitudinal X. Les termes « horizontal » et « vertical » sont définis par rapport à la direction de la pesanteur qui définit la verticale. L'horizontal est perpendiculaire à la direction de la pesanteur et la verticale est parallèle à la direction de la pesanteur.

La turbomachine 1 comprend d'amont en aval, une soufflante 2, au moins un compresseur tel qu'un compresseur basse pression 3 et un compresseur haute pression 4, une chambre de combustion 5, au moins une turbine telle qu'une turbine haute pression 6 et une turbine basse pression 7, et une tuyère pour l'échappement des gaz.

La soufflante 2 permet l'aspiration d'un flux d'air F se divisant en un flux primaire F1 et un flux secondaire F2. Le flux primaire F1 traverse une veine primaire 1a de la turbomachine 1 tandis que le flux secondaire F2 est dirigé vers une veine secondaire 1b entourant la veine primaire 1a.

Le flux primaire F1 est comprimé au sein du compresseur basse pression 3 puis du compresseur haute pression 4. L'air comprimé est ensuite mélangé à un carburant et brulé au sein de la chambre de combustion 5. Les gaz formés par la combustion traversent les turbines haute pression 6 et basse pression 7. Les gaz s'échappent enfin au travers de la tuyère dont la section permet l'accélération de ces gaz pour générer de la propulsion.

La soufflante 2 est mobile en rotation autour de l'axe longitudinal X. La soufflante 2 comprend des aubes 2a régulièrement réparties autour d'un disque centré sur l'axe longitudinal X.

La soufflante 2 est par exemple carénée. La turbomachine 1 comprend alors une nacelle 2b annulaire centrée sur l'axe longitudinal X entourant la soufflante 2. La nacelle 2b est par exemple portée par un carter de soufflante (non représenté).

En outre, la turbomachine 1 comprend un carter d'entrée 8. Le carter d'entrée 8 est par exemple agencé à l'intérieur de la nacelle 2b. Le carter d'entrée 8 est par exemple agencé axialement entre la soufflante 2 et le compresseur basse pression 3. Le carter d'entrée 8 forme un bec d'entrée de la veine primaire 1a. Le carter d'entrée 8 comprend en particulier une virole externe 18 et une virole interne 19 agencée dans la virole externe 18. Les viroles externe et interne 18, 19 sont centrées sur l'axe longitudinal X et reliées par des bras radiaux.

La veine primaire 1a est délimitée en aval du bec d'entrée par des carters interne 110 agencés en aval de la virole externe 18 et de la virole interne 19. La veine secondaire 1b est par ailleurs délimitée radialement par la nacelle 2b et un carter inter-veines 180 agencée radialement entre la nacelle 2b et le carter d'entrée 8.

En outre, un compartiment inter-veines 1c est agencé radialement entre la veine secondaire 1b et la veine primaire 1a. Le compartiment inter-veines 1c présente une première zone Z1 délimitée intérieurement par la virole externe 18 et extérieurement par le carter inter-veines 180. Le compartiment inter-veines 1c comprend une seconde zone Z2 en aval de la première zone Z1. Dans l'exemple particulier de la figure 1, le rotor de la turbine basse pression 7 est relié au rotor du compresseur basse pression 3 par un arbre basse pression 10. Le rotor de la turbine haute pression 6 est quant à lui relié au rotor du compresseur haute pression 4 par un arbre haute pression 9. L'arbre basse pression 10 est agencé à l'intérieur de l'arbre haute pression 9 de manière coaxiale et s'étend le long de l'axe longitudinal X.

L'arbre basse pression 10 est guidé en rotation par des paliers. Un palier intermédiaire 10a est par exemple agencé radialement entre l'arbre basse pression 10 et un premier support palier 10b relié par exemple à la virole interne 19. Le palier intermédiaire 10a est par exemple un palier à billes.

La soufflante 2 est entrainée en rotation par un arbre de soufflante 11. L'arbre de soufflante 11 est relié au disque pour son entrainement en rotation. L'arbre de soufflante 11 est soutenu par un palier aval 11a agencé radialement entre l'arbre de soufflante 11 et un second support palier 11b relié à la virole interne 19. Le palier aval 11a est par exemple un palier à billes. Il est agencé en amont du palier intermédiaire 10a. Le palier aval 11a est agencé sur une extrémité aval de l'arbre de soufflante 11.

L'arbre de soufflante 11 est par ailleurs relié à l'arbre basse pression 10 par l'intermédiaire d'un réducteur de vitesse 12. Le réducteur de vitesse 12 est de type mécanique.

Comme mieux visible sur la figure 2, le réducteur de vitesse 12 comprend un solaire 13, une couronne 14, au moins un satellite 15 qui engrène avec la couronne 14 et le solaire 13 et un porte-satellite 16.

Le solaire 13 est couplé en rotation avec l'arbre basse pression 10. Il forme l'entrée du réducteur 12.

Le réducteur de vitesse 12 comprend une pluralité de satellites 15. Chaque satellite 15 présente un axe central Y parallèle à l'axe longitudinal X.

La couronne 14 est annulaire et est agencée autour de l'axe longitudinal X. Selon l'exemple de la figure 1, la couronne 14 est couplée en rotation avec l'arbre de soufflante 11. La couronne 14 comprend par exemple une bride de fixation 14a reliée à l'arbre de soufflante 11 par exemple par le bais de tiges de fixation 14b tels que des vis. La couronne 14 forme la sortie du réducteur 12.

Le porte-satellite 16 est fixe en rotation autour de l'axe longitudinal X. Le porte-satellite 16 est relié à une structure fixe de la turbomachine 1. Selon l'exemple de la figure 2, le porte-satellite 16 est relié à la virole interne 19, par exemple par le biais d'un support souple 11c.

Le réducteur de vitesse 12 est composé d'engrenages et de roulements qui nécessitent une lubrification. A cet effet, de l'huile de lubrification est projetée sur le réducteur de vitesse 12. Afin de préserver les autres organes de la turbomachine 1 de cette huile, le réducteur de vitesse 12 est agencé dans une enceinte de lubrification 17 annulaire. L'enceinte de lubrification 17 est par exemple une enceinte amont. L'enceinte de lubrification 17 est située à l'intérieur de la virole interne 19. Elle peut comprendre le palier amont 11a et le palier intermédiaire 10a.

L'enceinte de lubrification 17 présente un fond d'enceinte F. Le fond d'enceinte F est situé au point le plus bas de l'enceinte de lubrification 17, c'est-à-dire de la virole interne 19. L'huile de lubrification s'écoule par gravité dans le fond d'enceinte F.

Parmi les bras radiaux s'étendant radialement entre la virole externe 18 et la virole interne 19, un bras 20 tubulaire est situé à 6h (six heures) par analogie à la position correspondante sur le cadran d'une horloge. Par simplification, dans la suite de la description, ce bras 6h sera désigné par « bras ».

Le bras 20 comprend une extrémité radialement interne 20a par exemple reliée à l'enceinte de lubrification 17, en particulier au fond d'enceinte F. L'extrémité radialement interne 20a est par exemple ouverte. Le bras 20 comporte en outre une extrémité radialement externe 20b reliée à la virole externe 18 et opposée à l'extrémité radialement interne 20a. L'extrémité radialement externe 20b présente une paroi de fond 20b' axiale préférentiellement formée par la virole externe 18.

Le bras 20 présente par ailleurs une première face et une seconde face opposées et s'étendant radialement entre l'extrémité radialement externe 20b et l'extrémité radialement interne 20a. Les première et seconde faces se rejoignent en un bord amont 201 et un bord aval 202. Les bords amont et aval 201, 202 sont reliés axialement entre eux à leur extrémité supérieure par la paroi de fond 20b'.

Le bras 20 comprend en outre une cavité interne 200 qui débouche dans l'enceinte de lubrification 17, et notamment dans le fond d'enceinte F, au travers d'une entrée d'huile 200a. L'huile de lubrification peut donc s'écouler par gravité en dehors de l'enceinte de lubrification 17 dans le bras 20. L'entrée d'huile 200a est ménagée par exemple dans la virole interne 19 et débouche dans la cavité interne 200.

Le bras 20 comporte en outre une première sortie 20c d'huile et une seconde sortie 20d d'huile opposées radialement à l'entrée d'huile 200a. Elles sont par exemple ménagées dans la paroi de fond 20b' et/ou la paroi aval 202. La première sortie 20c est par exemple ménagée dans la paroi aval 202 et la seconde sortie 20d est par exemple ménagée dans la paroi de fond 20b'. L'entrée d'huile 200a présente une première section de passage S1 et la première sortie d'huile 20c présente une seconde section de passage S2. Préférentiellement, la première section de passage S1 est supérieure ou égale à la seconde section de passage S2.

Le bras 20 comporte en outre une cloison radiale 21 agencée dans la cavité interne 200. La cloison radiale 21 est agencée axialement entre les première et seconde sorties 20c, 20d. La cloison radiale 21 est située en aval de l'entrée d'huile 200a. La cloison radiale 21 délimite dans le bras 20 un compartiment amont 21a et un compartiment aval 21b. Les compartiments amont et aval 21a, 21b présentent chacun un volume prédéterminé. La première sortie 20c est située dans le compartiment aval 21b et la seconde sortie 20d est située dans le compartiment amont 21a.

La cloison radiale 21 s'étend radialement vers l'intérieur à partir de la paroi de fond 20b'. La cloison radiale 21 présente une extrémité libre 210 radialement interne, opposée à la paroi de fond 20b'.

De manière préférée, la cloison radiale 21 présente une hauteur maximale H configurée pour que le volume du compartiment amont 21a soit suffisant pour empêcher le débordement d'huile dans l'enceinte de lubrification 17 lors d'une inclinaison maximale autorisée de la turbomachine 1 vers l'amont, typiquement lors d'une manœuvre en piqué de l'aéronef.

L'extrémité libre 210 est située à l'extérieur d'une première droite D1 passant par l'extrémité interne de la paroi amont 201 et parallèle à un plan horizontal lorsque la turbomachine 1 est inclinée vers l'amont selon un angle maximum d'inclinaison autorisé. Ceci permet d'empêcher le débordement d'huile dans l'enceinte de lubrification 17 lors d'une inclinaison maximale autorisée de la turbomachine 1 vers l'amont, typiquement lors d'une manœuvre en piqué de l'aéronef. Par exemple, le ratio entre la hauteur maximale H de la cloison radiale 21 et la hauteur H' de la paroi amont 201 est compris entre 40% et 90%.

Selon l'invention, l'enceinte de lubrification 17 comprend en outre un déflecteur 22 relié à l'extrémité radialement interne 20a du bras 20. Le déflecteur 22 est configuré pour dévier l'huile s'écoulant par gravité de l'enceinte de lubrification 17 vers le compartiment amont 21a.

Le déflecteur 22 est relié à la virole interne 19. Il forme préférentiellement une seule pièce avec la virole interne 19. Selon un autre exemple, le déflecteur 22 et la virole interne 19 peuvent être deux pièces distinctes reliées l'une à l'autre.

Le déflecteur 22 comprend une paroi axiale 22a reliée à la virole interne 19 et au bras 20, notamment à l'extrémité inférieure de la paroi aval 202 du bras 20. La paroi axiale 22a présente une surface d'écoulement inclinée vers la cavité interne 200 du bras 20. Ainsi, la paroi axiale 22a s'éloigne continument de l'axe longitudinal X en progressant vers l'amont du bras 20. Préférentiellement, la paroi axiale 22a est inclinée selon un angle d'inclinaison ou une pente α compris entre 5° et 45° par rapport à l'axe longitudinal X. Une telle pente α permet de garantir un écoulement par gravité de l'huile dans le compartiment amont 21a malgré une inclinaison vers l'aval de la turbomachine 1, typiquement lors d'une manœuvre en cabré de l'aéronef, pendant les phases de décollage de l'aéronef par exemple. Avantageusement, le déflecteur 22 présente une largeur circonférentielle égale à une largeur circonférentielle du bras 20. Le déflecteur 22 s'étend circonférentiellement entre les première et seconde faces du bras 22. Ceci permet d'éviter que de l'huile ne s'écoule par gravité dans le compartiment aval 21b.

Le déflecteur 22 obture en partie l'extrémité radialement interne 20a du bras 20. Le déflecteur 22 présente un bord 22b axialement opposé à la paroi aval 202 du bras 20. Ce bord 22b délimite axialement avec la paroi amont 201 du bras 20 l'entrée d'huile 200a.

De manière préférée, la cloison radiale 21 est positionnée dans la cavité interne 200 du bras 20 de façon à ce que l'huile s'écoule à partir du fond d'enceinte F dans le compartiment amont 21a lors d'une inclinaison maximale autorisée de la turbomachine 1 vers l'aval, typiquement lors d'une manœuvre en cabré de l'aéronef, pendant les phases de décollage de l'aéronef par exemple.

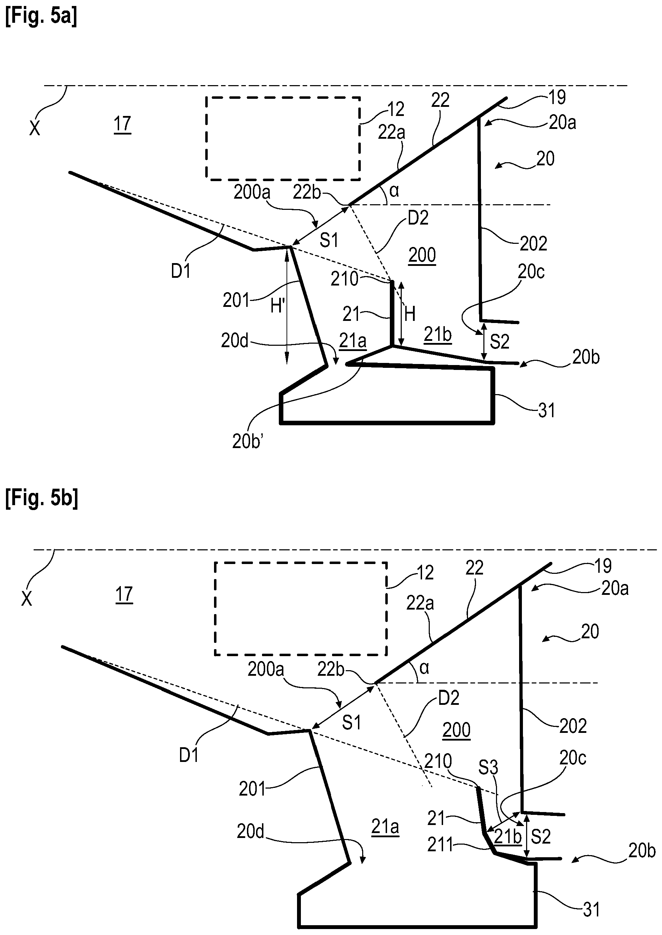

Selon un premier mode de réalisation représenté sur les figures 5a et 5b, l'extrémité libre 210 de la cloison 21 est située sur ou en aval d'une seconde droite D2 passant par le bord libre 22b du déflecteur 22 et parallèle à un plan vertical lorsque la turbomachine 1 est inclinée vers l'aval selon un angle d'inclinaison maximum autorisé. Ceci assure l'écoulement de l'huile dans le compartiment amont 21a plutôt que dans le compartiment aval 21b pendant une manœuvre en cabré de l'aéronef.

Selon une variante du premier mode de réalisation représenté sur la figure 5b, la cloison 21 présente une section courbe 211 reliée à la paroi de fond 20b'. Ceci permet d'agrandir le volume du compartiment amont 20a. Selon cette variante, afin de minimiser les pertes de charge, la seconde section S2 est inférieure à une section de passage intermédiaire S3 d'huile du compartiment aval 21b.

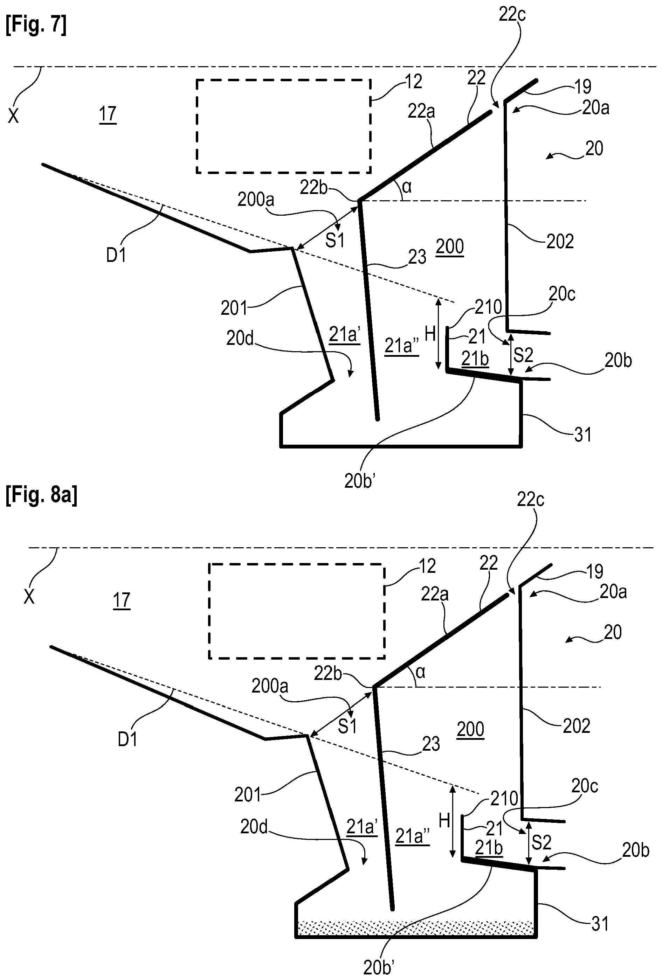

Selon un second mode de réalisation représenté sur la figure 7, une barrière de séparation 23 est agencée dans le compartiment amont 21a. La barrière de séparation 23 sépare le compartiment amont 21a en un premier sous compartiment 21a' et un second sous compartiment 21a". Le second sous compartiment 21a" est situé entre le compartiment aval 21b et le premier sous-compartiment 21a'. Les premier et second sous compartiments 21a', 21a" sont séparées par la barrière de séparation 23.

Préférentiellement, la barrière de séparation 23 s'étend radialement vers l'extérieur à partir du déflecteur 22 et s'étend au moins jusqu'à la seconde sortie 20d. Dans l'exemple de la figure 7, la barrière de séparation 23 s'étend dans la seconde sortie 20d. Encore plus préférentiellement, la barrière de séparation 23 est reliée au bord 22b du déflecteur 22. La barrière de séparation 23 et le déflecteur 22 peuvent former une seule pièce ou deux pièces distinctes reliées l'une à l'autre par collage par exemple.

Préférentiellement, un évent 22c est ménagée dans la paroi axiale 22a du déflecteur 22. L'évent 22c est traversant et débouche dans l'enceinte de lubrification 17 et dans une partie de la cavité interne 200 située du côté du compartiment aval 21b.

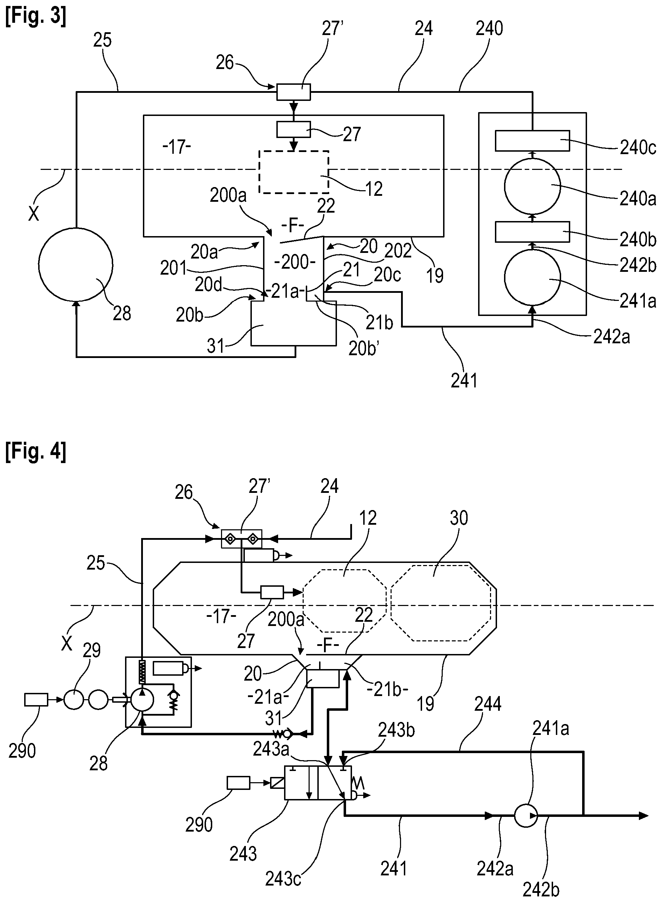

Afin d'assurer la lubrification du réducteur de vitesse 12 dans l'enceinte de lubrification 17, la turbomachine 1 comprend un système de lubrification du réducteur de vitesse 12 représenté par exemple sur les figures 3 et 4.

Le système de lubrification comprend un circuit principal 24 de lubrification, un circuit auxiliaire 25 de lubrification, les circuits principal et auxiliaire 24, 25 étant reliés à l'enceinte de lubrification 17. Le système de lubrification 23 peut comprendre en outre un dispositif sélectif de projection 26 de l'huile de lubrification dans l'enceinte de lubrification 17, ce dispositif sélectif de projection 26 étant relié au circuit principal 24 et au circuit auxiliaire 25.

Le circuit principal 24 comprend typiquement un circuit d'alimentation 240 reliant un réservoir principal 240b à l'enceinte de lubrification 17. Le circuit d'alimentation 240 comprend une pompe d'alimentation 240a montée entre le réservoir principal 240b et l'enceinte de lubrification 17, en particulier entre le réservoir principal 240b et le dispositif sélectif de projection 26. La pompe d'alimentation 240a est par exemple entrainée mécaniquement par l'arbre haute pression 9. Avantageusement, la pompe d'alimentation 240a est reliée à l'arbre haute pression 9 par l'intermédiaire d'une boite d'accessoire (AGB pour « accessory gearbox » en langue anglaise). La boite d'accessoire est par exemple logée dans le compartiment inter-veines 1c. Ainsi, lorsque l'arbre haute pression 9 est entrainé en rotation, il amorce la pompe d'alimentation 240a qui aspire l'huile du réservoir principal 240b et alimente en huile le dispositif sélectif de projection 26. Le circuit d'alimentation 240 peut comprendre en outre au moins un échangeur air/huile 240c agencé par exemple entre le dispositif sélectif de projection 26 et la pompe d'alimentation 240a.

Le circuit principal 24 comprend en outre un circuit retour 241 reliant le réservoir principal 240b au compartiment aval 21b du bras 20. Le circuit retour 241 comprend une pompe de récupération 241a qui est avantageusement agencée dans le compartiment inter-veines 1c. La pompe de récupération 241a est reliée au réservoir principal 240b et à la première sortie 20c du bras 20. En particulier, la pompe de récupération 241a présente une ligne hydraulique d'entrée 242a reliée à la première sortie 20c et une ligne hydraulique de sortie 242b qui est reliée au réservoir principal 240b. Dans certains cas, l'arbre haute pression 9 n'est pas entrainé en rotation ou entrainé à une vitesse de rotation insuffisante pour entrainer en rotation la pompe d'alimentation 240a. Par exemple, lorsque la soufflante 2 est en rotation libre (ou auto rotation, également connue sous l'expression anglaise « windmilling »), ou lors des phases de démarrage ou d'arrêt de la turbomachine 1, la pompe d'alimentation 240a n'est pas amorcée et n'est plus capable d'alimenter en huile le dispositif sélectif de projection 26. Le réducteur de vitesse 12 n'est alors plus lubrifié par le circuit principal 24. La lubrification du réducteur de vitesse 12 est assurée dans un tel cas par le circuit auxiliaire 25.

Le circuit auxiliaire 25 est un circuit fermé de lubrification de l'enceinte de lubrification 17. Il comprend une pompe auxiliaire 28 reliée à un réservoir auxiliaire 31 et à l'enceinte de lubrification 17, en particulier au dispositif sélectif de projection 26.

Le réservoir auxiliaire 31 est situé à l'extérieur de la virole externe 18. De manière préférée, le réservoir auxiliaire 31 est agencé dans le compartiment inter-veines 1c, par exemple dans la première zone Z1. Le réservoir auxiliaire 31 étant situé en dehors de la veine primaire 1a, le réservoir auxiliaire 31 peut présenter un volume interne important sans impacter les performances aérodynamiques de la turbomachine 1. Un grand volume d'huile peut ainsi être stocké.

Le réservoir auxiliaire 31 est relié à la seconde sortie 20d d'huile du bras 20. Ainsi, le réservoir auxiliaire 31 et le compartiment amont 21a sont communicants. L'huile s'écoulant par gravité dans le compartiment amont 21a est stockée dans le réservoir auxiliaire 31. Grâce au déflecteur 22 de l'invention, le réservoir auxiliaire 31 est rempli en priorité. Les risques de sous alimenter le réservoir auxiliaire 31 en huile sont limités. Ceci assure la lubrification du réducteur de vitesse 12 de manière fiable quelles que soient les phases de fonctionnement de la turbomachine 1.

Préférentiellement, le réservoir auxiliaire 31 est directement raccordé à la seconde sortie 20d d'huile du bras 20.

La pompe auxiliaire 28 est entrainée par exemple par un moteur électrique 29. La pompe auxiliaire 28 et le moteur électrique 29 sont par exemple agencés dans le compartiment inter-veines 1c. Le moteur électrique 29 est alimenté en énergie électrique par un générateur électrique (non représenté) par exemple situé dans l'enceinte de lubrification 17. Le générateur électrique permet de fournir une énergie électrique au moteur électrique 29 à partir d'une énergie mécanique. Le générateur électrique prélève par exemple de l'énergie mécanique sur l'arbre de soufflante 11. Par exemple, le générateur électrique est relié à l'arbre de soufflante 11 par l'intermédiaire d'engrenages 30.

Le moteur électrique est par exemple piloté par une unité de contrôle 290. L'unité de contrôle 290 permet de moduler le régime de la pompe auxiliaire 28 via le moteur électrique. L'unité de contrôle est par exemple un FADEC (pour « Full Automatic Digital Engine Control » en langue anglaise).

Selon un autre exemple, la pompe auxiliaire 28 est entrainée par l'arbre basse pression 10.

Le dispositif sélectif de projection 26 comprend par exemple un organe de sélection 27' et au moins un gicleur 27 qui est agencé dans l'enceinte de lubrification 17. L'organe de sélection 27' est par exemple une vanne de sélection reliée aux circuits principal et auxiliaire 24, 25.

Le gicleur 27 permet de projeter l'huile de lubrification dans l'enceinte de lubrification 17. Le dispositif sélectif de projection 26 comprend avantageusement deux gicleurs 27, un premier gicleur projetant l'huile de lubrification sur le réducteur de vitesse 12 et un second gicleur projetant l'huile sur les engrenages 30. Les gicleurs sont reliés à l'organe de sélection 27' et sont alimentés en huile de lubrification par l'un des circuits 24, 25 selon la position de la vanne de sélection.

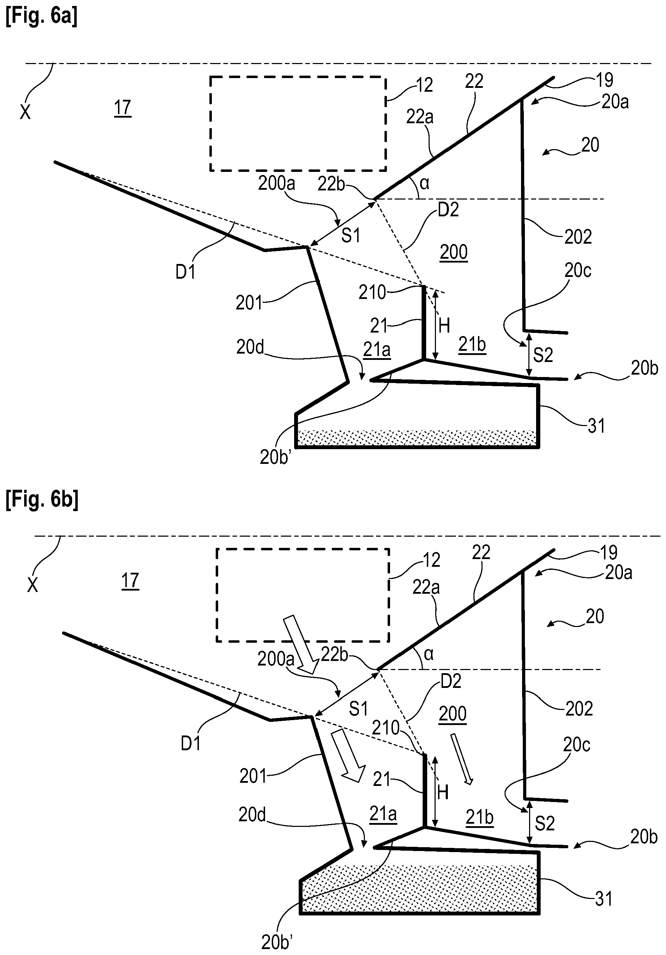

Le fonctionnement des circuits principal et auxiliaire 24, 25 va maintenant être décrit en référence aux figures 6a à 6d et 8a à 8d.

Sur les figures 6a et 8a, la turbomachine 1 est à l'arrêt. Les circuits principal et auxiliaire 24, 25 sont donc à l'arrêt. Dans cette première phase, le réservoir auxiliaire 31 comprend de l'huile restante d'un vol précédent.

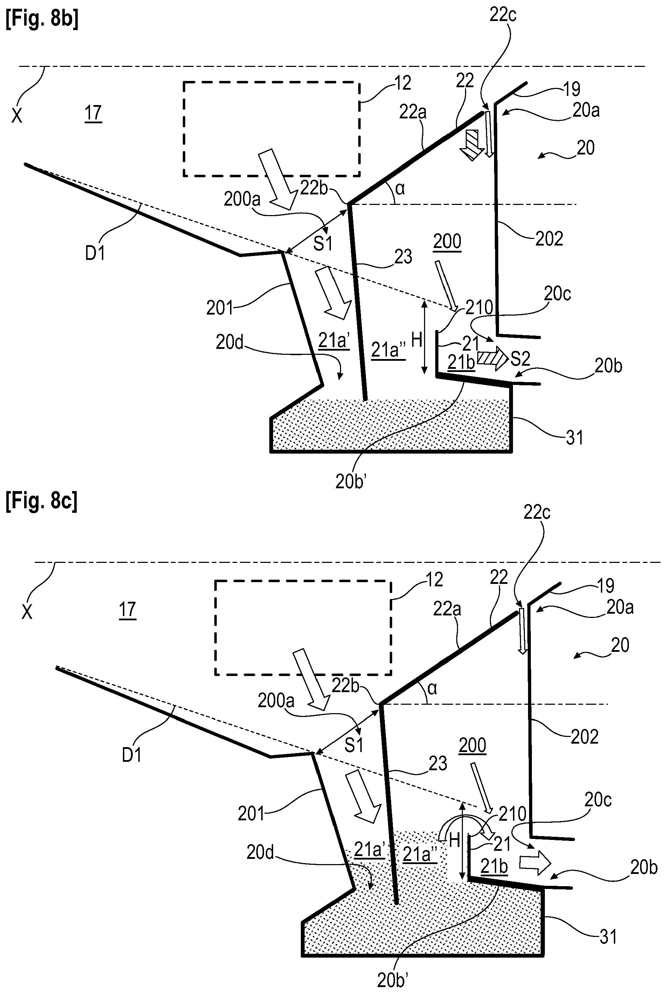

Dans une première phase de fonctionnement nominal de la turbomachine 1 illustrée sur les figures 6b et 8b, le circuit auxiliaire 25 est inactif c'est-à-dire que la pompe auxiliaire 28 est inactive. Le circuit principal 24 est actif c'est-à-dire que la pompe d'alimentation 240a est active et aspire l'huile du réservoir principal 240b. L'huile est acheminée jusqu'à l'enceinte de lubrification 17 par le circuit principal 24. Dans cette première phase, l'huile de lubrification s'écoule par gravité dans le fond d'enceinte F et s'écoule dans le bras 20. Grâce au déflecteur 22, l'huile s'écoule préférentiellement dans le compartiment amont 21a comme indiquée par les flèches non hachurées. Cette huile est stockée dans le réservoir auxiliaire 31. Dans cette phase, le volume d'huile dans le compartiment amont 21a est inférieur au volume maximal du compartiment amont 21a. La pompe de récupération 241a est par ailleurs par exemple active. Une faible quantité d'huile s'écoulant par gravité dans la cavité interne 200 du bras 20 peut être aspirée par la pompe de récupération 241a.

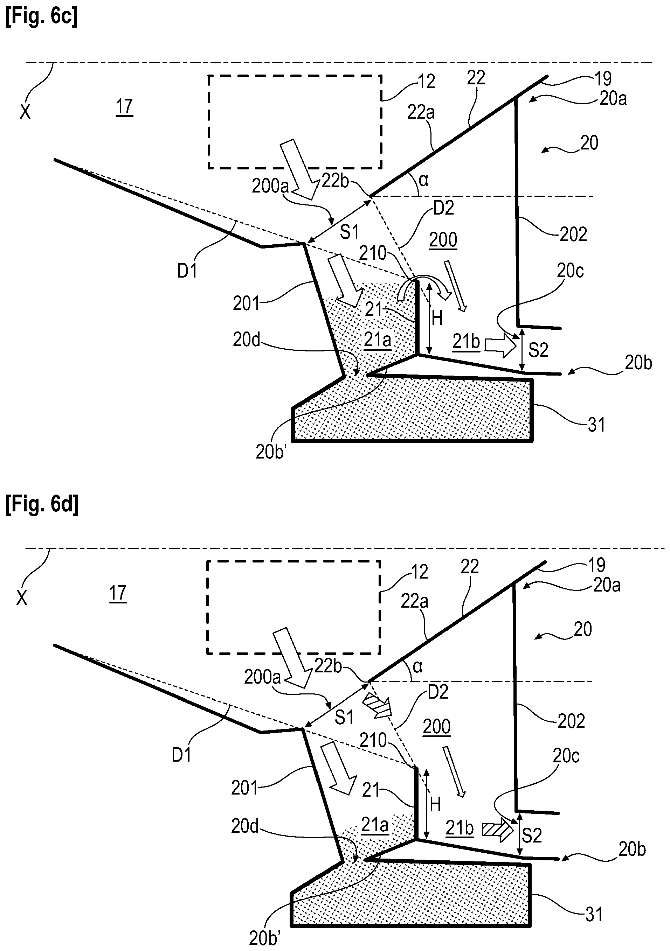

Durant cette phase, selon le dimensionnement de la pompe de récupération 241a, il existe un risque que cette dernière aspire un important volume d'huile du compartiment amont 21a. Afin de ne pas vidanger l'huile du compartiment amont 21a, dans le second mode de réalisation illustré sur la figure 8b, l'évent 22c permet l'aspiration d'air de l'enceinte de lubrification 17 par la pompe de récupération 241a comme schématisé par les flèches hachurées. Dans une deuxième phase de fonctionnement nominal de la turbomachine 1 illustrée sur les figures 6c et 8c, le circuit principal 24 est toujours actif mais le volume d'huile dans le réservoir auxiliaire 31 est supérieur au volume maximal du réservoir auxiliaire 31 et au volume maximal du compartiment amont 21a. L'huile est transvasée par débordement dans le compartiment aval 21b. La pompe de récupération 241a dans cette deuxième phase aspire alors de l'huile du compartiment aval 21b et permet alors la circulation de l'huile dans le circuit retour 241 du circuit principal 24 pour alimenter en huile le réservoir principal 240b.

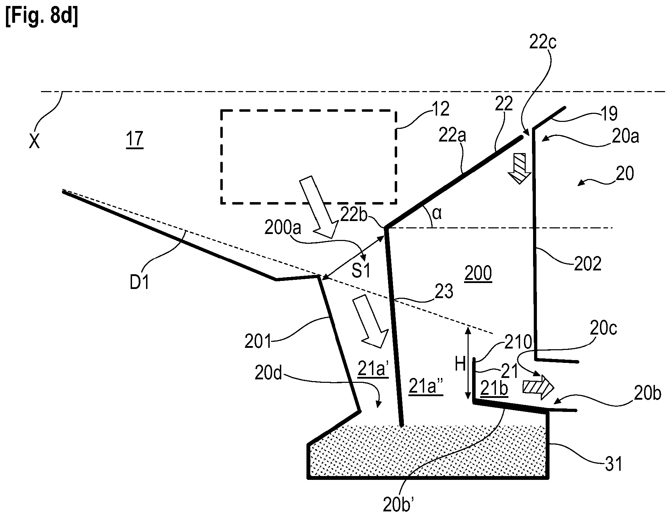

Dans une troisième phase de fonctionnement de la turbomachine 1 illustrée sur les figures 6d et 8d, par exemple en cas de rotation libre de la soufflante 2 et arrêt ou vitesse de rotation insuffisante de l'arbre haute pression 10, la pression dans le circuit principal 24 diminue de telle sorte que l'organe de sélection 27' devient alimenté par le circuit auxiliaire 25 dans lequel la pression d'huile est supérieure. En effet, la pompe d'alimentation 240a est alors désamorcée ou fournit un débit insuffisant, tandis que le circuit auxiliaire 25 est actif. La pompe auxiliaire 28 aspire l'huile du réservoir auxiliaire 31 et permet sa circulation dans le circuit auxiliaire 25 pour la lubrification du réducteur 12 dans l'enceinte de lubrification 17. La pompe de récupération 241a quant à elle peut encore tourner à une vitesse suffisante pour qu'elle entraine une aspiration significative d'air par la pompe depuis le compartiment amont 21a comme illustré par les flèches hachurées.

Une telle aspiration d'air peut entrainer un endommagement par cavitation de la pompe de récupération 241a.

Pour limiter ce risque de cavitation, selon un mode de réalisation particulièrement avantageux illustré sur la figure 4, le circuit retour 241 comprend une vanne auxiliaire 243 hydraulique agencée entre le bras 20 et la pompe de récupération 241a et une ligne hydraulique anti-cavitation 244 reliée à la ligne hydraulique de sortie 242b de la pompe de récupération 241a.

La vanne auxiliaire 243 comprend un premier port d'entrée 243a relié à la première sortie d'huile 20c du bras 20, un second port d'entrée 243b relié à la ligne hydraulique anti-cavitation 244 et un port de sortie 243c relié à la ligne hydraulique d'entrée 242a de la pompe de récupération 241a.

La vanne auxiliaire 243 comprend en outre un organe mobile entre une première position dans laquelle le port de sortie 243c est en communication fluidique avec le premier port d'entrée 243a et une seconde position dans laquelle le port de sortie 243c est en communication fluidique avec le second port d'entrée 243b. Dans la première position, la pompe de récupération 241a aspire l'huile du compartiment aval 21b tandis que dans la seconde position, la pompe de récupération 241a aspire l'huile du réservoir principal 240b.

La vanne auxiliaire 243 est par exemple une vanne à ressort.

Préférentiellement, la vanne auxiliaire 243 présente une commande de type électrique. Elle est par exemple commandée par l'unité de commande 290. Ainsi, lorsque la turbomachine 1 est par exemple dans la troisième phase de fonctionnement, par exemple de rotation libre de la soufflante 2, l'unité de commande 290 commande la vanne auxiliaire 243 dans la seconde position. La pompe de récupération 241a peut ainsi aspirer de l'huile du réservoir principal 240b et non de l'air du compartiment aval 21b. Un tel mode de réalisation permet donc de limiter les risques d'endommagement de la pompe de récupération 241a par cavitation.

Grâce à l'invention, il est possible d'augmenter le volume du réservoir auxiliaire 31 sans impacter les performances aérodynamiques et l'encombrement de la turbomachine 1.

Grâce à l'invention, il est possible de garantir un volume d'huile suffisant dans le réservoir auxiliaire 31 pour la lubrification du réducteur de vitesse 12 dans l'enceinte de lubrification 17 en cas d'arrêt de la pompe d'alimentation 240a du circuit principal 24, par exemple en cas de rotation libre de la soufflante 2.

Grâce au mode de réalisation avantageux de l'invention, il est possible d'alimenter le compartiment amont 21a malgré une manœuvre en cabré de l'aéronef.

Grâce au mode de réalisation avantageux de l'invention, les risques de débordement d'huile du compartiment amont 21a dans l'enceinte de lubrification 17 en cas de manœuvre en piqué de l'aéronef sont réduits.

## Revendications

1. Turbomachine (1) pour un aéronef, s'étendant autour d'un axe longitudinal (X) et comprenant :
- une soufflante (2) entrainée en rotation autour de l'axe longitudinal (X) par un arbre de soufflante (11),
- un arbre basse pression (10) relié à l'arbre de soufflante par un réducteur de vitesse (12) mécanique,
- une enceinte de lubrification (17) annulaire dans laquelle est agencée le réducteur de vitesse (12),
- un système de lubrification du réducteur de vitesse (12) comprenant un circuit principal (24) de lubrification et un circuit auxiliaire (25) de lubrification reliés à l'enceinte de lubrification (17), le circuit auxiliaire (25) étant relié à un réservoir auxiliaire (31),
- un carter d'entrée (8) comprenant une virole interne (19) et une virole externe (18) qui sont centrées sur l'axe longitudinal (X) et qui sont reliées par des bras, la virole interne (19) s'étendant autour de ladite enceinte de lubrification (17) et le réservoir auxiliaire (31) étant situé à l'extérieur de la virole externe (18), l'un des bras, appelé bras 6h (20), étant tubulaire et situé à 6h, ce bras 6h (20) comportant :
une extrémité radialement externe (20b) reliée à la virole externe (18) et une extrémité radialement interne (20a) opposée,
une cavité interne (200) débouchant dans l'enceinte de lubrification (17) au travers d'une entrée d'huile (200a),
une première sortie d'huile (20c) reliée au circuit principal (24),
une seconde sortie d'huile (20d) reliée au réservoir auxiliaire (31), les première et seconde sorties d'huile (20c, 20d) étant radialement opposées à l'entrée d'huile (200a), et
une cloison (21) radiale agencée dans la cavité interne (200) et délimitant un compartiment amont (21a) et un compartiment aval (21b), la seconde sortie (20d) étant située dans le compartiment amont (21a) et la première sortie (20c) étant située dans le compartiment aval (21b), **caractérisée en ce que** l'enceinte de lubrification (17) comporte en outre un déflecteur (22) relié à l'extrémité radialement interne (20a) du bras 6h (20) et configuré pour dévier de l'huile s'écoulant par gravité de l'enceinte de lubrification (17) vers le compartiment amont (21a).

2. Turbomachine selon la revendication précédente, **caractérisée en ce que** le déflecteur (22) comprend une paroi axiale (22a) reliée au bras 6h (20) et à la virole interne (19), la paroi axiale (22a) présentant une surface d'écoulement inclinée vers la cavité interne (200) de telle manière que ladite paroi axiale (22a) s'éloigne continument de l'axe longitudinal (X) en progressant vers l'amont du bras 6h (20).

3. Turbomachine selon l'une quelconque des revendications précédentes, **caractérisée en ce que** le bras 6h (20) comprend des parois amont et aval (201, 202) axialement opposées et s'étendant radialement entre les extrémités interne et externe (20a, 20b), l'entrée d'huile (200a) étant délimitée axialement par un bord (22b) du déflecteur (22) et la paroi amont (201) du bras 6h (20).

4. Turbomachine selon l'une quelconque des revendications précédentes, **caractérisée en ce que** le déflecteur (22) présente une largeur circonférentielle égale à une largeur circonférentielle du bras 6h (20).

5. Turbomachine selon l'une quelconque des revendications précédentes, **caractérisée en ce que** l'entrée d'huile (200a) présente une section de passage (S1) égale ou supérieure à une section de passage (S2) de la première sortie d'huile (20c).

6. Turbomachine selon l'une quelconque des revendications précédentes, **caractérisée en ce que** l'extrémité radialement externe (20b) du bras 6h (20) présente une paroi de fond (20b') dans laquelle est ménagée la seconde sortie d'huile (20d), la cloison (21) s'étendant radialement vers l'intérieur du bras 6h (20) à partir de la paroi de fond (20b').

7. Turbomachine selon l'une quelconque des revendications précédentes, **caractérisée en ce qu'**une barrière de séparation (23) est agencée dans la cavité interne (200) et s'étend radialement du déflecteur (22) au moins jusqu'à la seconde sortie d'huile (20d).

8. Turbomachine selon la revendication précédente, **caractérisée en ce qu'**un évent (22c) est ménagé dans le déflecteur (22) et débouche dans l'enceinte de lubrification (17) et dans la cavité interne (200) du côté du compartiment aval (21b) .

9. Turbomachine selon l'une quelconque des revendications précédentes, **caractérisée en ce que** le réservoir auxiliaire (31) est directement raccordé à la seconde sortie d'huile (20d).

10. Turbomachine selon l'une quelconque des revendications précédentes, **caractérisée en ce que** le réservoir auxiliaire (31) est logé dans un compartiment inter-veines (1c) qui sépare un flux d'air (F) produit par la soufflante (2) en un flux primaire (F1) et un flux secondaire (F2).

11. Turbomachine selon l'une quelconque des revendications précédentes, **caractérisée en ce que** le circuit principal (24) comprend :
- une pompe de récupération (241a) présentant une ligne hydraulique d'entrée (242a) et une ligne hydraulique de sortie (242b),
- une ligne hydraulique anti-cavitation (244) reliée à la ligne hydraulique de sortie (242b) de la pompe de récupération (241a), et
- une vanne auxiliaire (243) hydraulique agencée entre la pompe de récupération (241a) et le bras (20), la vanne auxiliaire (243) comprenant :
un premier port d'entrée (243a) relié à la première sortie d'huile (20c),
un second port d'entrée (243b) relié à la ligne hydraulique anti-cavitation (244),
un port de sortie (243c) relié à ligne hydraulique d'entrée (242a) de la pompe de récupération (241a), et,
un organe mobile entre une première position dans laquelle le port de sortie (243c) est en communication fluidique avec le premier port d'entrée (243a) et une seconde position dans laquelle le port de sortie (243c) est en communication fluidique avec le second port d'entrée (243b).

## Patentansprüche

1. Turbotriebwerk (1) für ein Luftfahrzeug, wobei sich das Turbotriebwerk um eine Längsachse (X) erstreckt und umfasst:
- ein Gebläse (2), das von einer Gebläsewelle (11) in Drehung um die Längsachse (X) angetrieben wird,
- eine Niederdruckwelle (10), die über ein mechanisches Drehzahlmindergetriebe (12) mit der Gebläsewelle verbunden ist,
- eine ringförmige Schmierkammer (17), in der das Drehzahlmindergetriebe (12) angeordnet ist,
- ein Schmiersystem für das Drehzahlmindergetriebe (12), das einen Hauptschmierkreis (24) und einen Hilfsschmierkreis (25) umfasst, die mit der Schmierkammer (17) verbunden sind, wobei der Hilfsschmierkreis (25) mit einem Hilfstank (31) verbunden ist,
- einen Einlasskasten (8), umfassend einen inneren Klemmring (19) und einen äußeren Klemmring (18) umfasst, die auf der Längsachse (X) zentriert sind und die durch Arme miteinander verbunden sind, wobei sich der inneren Klemmring (19) um die Schmierkammer (17) herum erstreckt und sich der Hilfstank (31) außerhalb des äußeren Klemmrings (18) befindet, wobei einer der Arme, der als Sechs-Uhr-Arm (20) bezeichnet wird, rohrförmig ist und sich an der Sechs-Uhr-Position befindet, wobei dieser Sechs-Uhr-Arm (20) umfasst:
ein radial äußeres Ende (20b), das mit dem äußeren Klemmring (18) verbunden ist, und ein gegenüberliegendes, radial inneres Ende (20a),
einen Innenhohlraum (200), der über einen Öleinlass (200a) in die Schmierkammer (17) mündet,
einen ersten Ölauslass (20c), der mit dem Hauptschmierkreis (24) verbunden ist,
einen zweiten Ölauslass (20d), der mit dem Hilfstank (31) verbunden ist, wobei der erste und der zweite Ölauslass (20c, 20d) dem Öleinlass (200a) radial gegenüberliegen, und
eine radiale Zwischenwand (21), die in dem Innenhohlraum (200) angeordnet ist und ein stromaufwärtiges Abteil (21a) sowie ein stromabwärtiges Abteil (21b) begrenzt, wobei sich der zweite Auslass (20d) in dem stromaufwärtigen Abteil (21a) befindet und sich der erste Auslass (20c) in dem stromabwärtigen Abteil (21b) befindet,
**dadurch gekennzeichnet, dass** die Schmierkammer (17) ferner ein Leitblech (22) aufweist, der mit dem radial inneren Ende (20a) des Sechs-Uhr-Arms (20) verbunden ist und konfiguriert ist, um Öl, das aufgrund der Schwerkraft aus der Schmierkammer (17) fließt, in Richtung des stromaufwärtigen Abteils (21a) umzuleiten.

2. Turbotriebwerk nach dem vorstehenden Anspruch, **dadurch gekennzeichnet, dass** das Leitblech (22) eine Axialwand (22a) aufweist, die mit dem Sechs-Uhr-Arm (20) und dem inneren Klemmring (19) verbunden ist, wobei die Axialwand (22a) eine zum Innenhohlraum (200) hin geneigte Strömungsfläche aufweist, derart, dass sich die Axialwand (22a) in Richtung des stromaufwärtigen Endes des Sechs-Uhr-Arms (20) kontinuierlich von der Längsachse (X) entfernt.

3. Turbotriebwerk nach einem der vorstehenden Ansprüche, **dadurch gekennzeichnet, dass** der Sechs-Uhr-Arm (20) stromaufwärtige und stromabwärtige Wände (201, 202) aufweist, die axial gegenüberliegen und sich radial zwischen dem inneren und dem äußeren Ende (20a, 20b) erstrecken, wobei der Öleinlass (200a) axial durch eine Kante (22b) des Leitblechs (22) und die stromaufwärtige Wand (201) des Sechs-Uhr-Arms (20) begrenzt ist.

4. Turbotriebwerk nach einem der vorstehenden Ansprüche, **dadurch gekennzeichnet, dass** das Leitblech (22) eine Umfangsbreite aufweist, die einer Umfangsbreite des Sechs-Uhr-Arms (20) entspricht.

5. Turbotriebwerk nach einem der vorstehenden Ansprüche, **dadurch gekennzeichnet, dass** der Öleinlass (200a) einen Durchflussquerschnitt (S1) aufweist, der gleich oder größer ist als ein Durchflussquerschnitt (S2) des ersten Ölauslasses (20c).

6. Turbotriebwerk nach einem der vorstehenden Ansprüche, **dadurch gekennzeichnet, dass** das radial äußere Ende (20b) des Sechs-Uhr-Arms (20) eine Bodenwand (20b') aufweist, in der der zweite Ölauslass (20d) ausgebildet ist, wobei sich die Zwischenwand (21) von der Bodenwand (20b') aus radial nach innen in den Sechs-Uhr-Arm (20) erstreckt.

7. Turbotriebwerk nach einem der vorstehenden Ansprüche, **dadurch gekennzeichnet, dass** in dem Innenhohlraum (200) eine Trenndichtung (23) angeordnet ist, die sich radial von dem Leitblech (22) bis mindestens zum zweiten Ölauslass (20d) erstreckt.

8. Turbotriebwerk nach dem vorstehenden Anspruch, **dadurch gekennzeichnet, dass** in dem Leitblech (22) eine Entlüftungsöffnung (22c) ausgebildet ist, die in die Schmierkammer (17) und in den Innenhohlraum (200) auf der Seite des stromabwärtigen Abteils (21b) mündet.

9. Turbotriebwerk nach einem der vorstehenden Ansprüche, **dadurch gekennzeichnet, dass** der Hilfstank (31) direkt an den zweiten Ölauslass (20d) angeschlossen ist.

10. Turbotriebwerk nach einem der vorstehenden Ansprüche, **dadurch gekennzeichnet, dass** der Hilfstank (31) in einem Zwischenstromabteil (1c) untergebracht ist, das einen von dem Gebläse (2) erzeugten Luftstrom (F) in einen Primärstrom (F1) und einen Sekundärstrom (F2) aufteilt.

11. Turbotriebwerk nach einem der vorstehenden Ansprüche, **dadurch gekennzeichnet, dass** der Hauptschmierkreis (24) umfasst:
- eine Rückgewinnungspumpe (241a), die eine hydraulische Einlassleitung (242a) und eine hydraulische Auslassleitung (242b) aufweist,
- eine hydraulische Antikavitationsleitung (244), die mit der hydraulischen Auslassleitung (242b) der Rückgewinnungspumpe (241a) verbunden ist, und
- ein hydraulisches Hilfsventil (243), das zwischen der Rückgewinnungspumpe (241a) und dem Arm (20) angeordnet ist, wobei das Hilfsventil (243) umfasst:
einen ersten Einlassanschluss (243a), der mit dem ersten Ölauslass (20c) verbunden ist,
einen zweiten Einlassanschluss (243b), der mit der hydraulischen Antikavitationsleitung (244) verbunden ist,
ein Auslassanschluss (243c), der mit der hydraulischen Einlassleitung (242a) der Rückgewinnungspumpe (241a) verbunden ist, und,
ein Element, das zwischen einer ersten Stellung, worin der Auslassanschluss (243c) in strömungstechnischer Kommunikation mit dem ersten Einlassanschluss (243a) steht, und einer zweiten Stellung, worin der Auslassanschluss (243c) in strömungstechnischer Kommunikation mit dem zweiten Einlassanschluss (243b) steht, beweglich ist.

## Claims

1. A turbine engine (1) for an aircraft, extending around a longitudinal axis (X) and comprising:
- a fan (2) driven in rotation around the longitudinal axis (X) by a fan shaft (11),
- a low-pressure shaft (10) connected to the fan shaft by a mechanical speed reduction gear (12),
- an annular lubrication enclosure (17) in which the speed reduction gear (12) is arranged,
- a system for lubricating the speed reduction gear (12) comprising a main lubrication circuit (24) and an auxiliary lubrication circuit (25) connected to the lubrication enclosure (17), the auxiliary circuit (25) being connected to an auxiliary reservoir (31),
- an inlet casing (8) comprising an internal shroud (19) and an external shroud (18) which are centered on the longitudinal axis (X) and which are connected by arms, the internal shroud (19) extending around said lubrication enclosure (17) and the auxiliary reservoir (31) being located outside the external shroud (18), one of the arms, called the 6 o'clock arm (20), being tubular and located at 6 o'clock, this 6 o'clock arm (20) comprising:
a radially external end (20b) connected to the external shroud (18) and an opposite radially internal end (20a),
an internal cavity (200) opening into the lubrication enclosure (17) via an oil inlet (200a),
a first oil outlet (20c) connected to the main circuit (24),
a second oil outlet (20d) connected to the auxiliary reservoir (31), the first and second oil outlets (20c, 20d) being radially opposite the oil inlet (200a), and
a radial bulkhead (21) arranged in the internal cavity (200) and delimiting an upstream compartment (21a) and a downstream compartment (21b), the second outlet (20d) being located in the upstream compartment (21a) and the first outlet (20c) being located in the downstream compartment (21b),
**characterised in that** the lubrication enclosure (17) further comprises a deflector (22) connected to the radially internal end (20a) of the 6 o'clock arm (20) and configured to deflect oil flowing by gravity from the lubrication enclosure (17) towards the upstream compartment (21a).

2. The turbine engine according to the preceding claim, **characterized in that** the deflector (22) comprises an axial wall (22a) connected to the 6 o'clock arm (20) and to the internal shroud (19), the axial wall (22a) having a flow surface inclined towards the internal cavity (200) in such a way that said axial wall (22a) moves continuously away from the longitudinal axis (X) as it progresses upstream of the 6 o'clock arm (20).

3. The turbine engine according to any one of the preceding claims, **characterised in that** the 6 o'clock arm (20) comprises axially opposed upstream and downstream walls (201, 202) extending radially between the internal and external ends (20a, 20b), the oil inlet (200a) being delimited axially by an edge (22b) of the deflector (22) and the upstream wall (201) of the 6 o'clock arm (20).

4. The turbine engine according to any one of the preceding claims, **characterised in that** the deflector (22) has a circumferential width equal to a circumferential width of the 6 o'clock arm (20).

5. The turbine engine according to any one of the preceding claims, **characterised in that** the oil inlet (200a) has a passage cross-section (S1) equal to or greater than a passage cross-section (S2) of the first oil outlet (20c).

6. The turbine engine according to any one of the preceding claims, **characterised in that** the radially external end (20b) of the 6 o'clock arm (20) has a bottom wall (20b') wherein the second oil outlet (20d) is formed, the bulkhead (21) extending radially towards the inside of the 6 o'clock arm (20) from the bottom wall (20b').

7. The turbine engine according to any one of the preceding claims, **characterised in that** a separation barrier (23) is arranged in the internal cavity (200) and extends radially from the deflector (22) at least as far as the second oil outlet (20d).

8. The turbine engine according to the preceding claim, **characterised in that** a vent (22c) is formed in the deflector (22) and opens into the lubrication enclosure (17) and into the internal cavity (200) on the side of the downstream compartment (21b).

9. The turbine engine according to any one of the preceding claims, **characterised in that** the auxiliary reservoir (31) is directly connected to the second oil outlet (20d).

10. The turbine engine according to any one of the preceding claims, **characterised in that** the auxiliary reservoir (31) is housed in an inter-vein compartment (1c) which separates an air stream (F) produced by the fan (2) into a primary stream (F1) and a secondary stream (F2).

11. The turbine engine according to any one of the preceding claims, **characterised in that** the main circuit (24) comprises:
- a recovery pump (241a) having a hydraulic inlet line (242a) and a hydraulic outlet line (242b),
- a hydraulic anti-cavitation line (244) connected to the hydraulic output line (242b) of the recovery pump (241a), and
- a hydraulic auxiliary valve (243) arranged between the recovery pump (241a) and the arm (20), the auxiliary valve (243) comprising:
a first inlet port (243a) connected to the first oil outlet (20c),
a second inlet port (243b) connected to the hydraulic anti-cavitation line (244),
an outlet port (243c) connected to the hydraulic input line (242a) of the recovery pump (241a), and,
a member movable between a first position in which the outlet port (243c) is in fluid communication with the first inlet port (243a) and a second position in which the outlet port (243c) is in fluid communication with the second inlet port (243b).
